Europäisches Patentamt

European Patent Office

Office européen des brevets

(19)

(11) Numéro de publication : **0 316 205 B1**

(12) **FASCICULE DE BREVET EUROPEEN**

(45) Date de publication du fascicule du brevet :
20.05.92 Bulletin 92/21

(51) Int. Cl.⁵ : **C01F 17/00**

(21) Numéro de dépôt : **88402470.4**

(22) Date de dépôt : **30.09.88**

(54) **Dispersion colloidale d'un composé de cérium IV en milieu aqueux et son procédé de préparation.**

(30) Priorité : **09.10.87 FR 8713953**

(43) Date de publication de la demande :
**17.05.89 Bulletin 89/20**

(45) Mention de la délivrance du brevet :
**20.05.92 Bulletin 92/21**

(84) Etats contractants désignés :
**AT BE CH DE ES FR GB GR IT LI LU NL SE**

(56) Documents cités :
**EP-A- 0 078 098**
**EP-A- 0 208 581**
**EP-A- 0 239 477**
**EP-A- 0 239 478**
**EP-A- 0 239 479**

(73) Titulaire : **RHONE-POULENC CHIMIE**
**25, quai Paul Doumer**
**F-92408 Courbevoie Cédex (FR)**

(72) Inventeur : **Grosbois, Jean**
**357 Parc de Cassan**
**F-95290 L'Isle Adam (FR)**

(74) Mandataire : **Dutruc-Rosset, Marie-Claude et al**
**RHONE-POULENC INTERSERVICES Service Brevets Chimie 25, Quai Paul Doumer**
**F-92408 Courbevoie Cédex (FR)**

## Description

La présente invention concerne une nouvelle dispersion colloïdale d'un composé de cérium IV en milieu aqueux et son procédé d'obtention.

Plus précisément, l'invention a pour but de fournir une dispersion colloïdale d'un composé de cérium IV en milieu aqueux présentant une faible acidité.

Dans l'exposé qui suit de l'invention, on désigne également par le vocable "sol", la dispersion colloïdale d'un composé de cérium IV, en milieu aqueux.

On précise également que "par faible acidité", on entend un pH supérieur ou égal à 3,5.

Pour de nombreuses applications dans le domaine de la catalyse et, en particulier, lors de la catalyse des réactions de postcombustion sur les gaz d'échappement de véhicules automobiles, on constate à l'heure actuelle, une demande de sols aqueux de composé de cérium IV présentant une faible acidité.

Il est décrit dans la demande de brevet européen EP-A- 0239477, qu'il est possible d'obtenir directement une dispersion aqueuse colloïdale d'un composé de cérium IV par mise en dispersion dans l'eau d'un composé de cérium IV répondant à la formule générale (I) :

$$Ce(OH)_x(NO_3)_y, pCeO_2, nH_2O \qquad (I)$$

dans laquelle:
- x est tel que x = 4 - y
- y est compris entre 0,35 et 1,5
- p est supérieur ou égal à 0 et inférieur ou égal à 2,0
- n est supérieur ou égal à 0 et inférieur ou égal à environ 20

Le sol obtenu est stable et présente un pH compris entre 1 et 2,5. Il est possible par basification jusqu'à un pH d'environ 3 d'obtenir un sol présentant des colloïdes plus gros et une bonne stabilité. Toutefois ce procédé ne convient pas pour obtenir un sol présentant une plus faible acidité.

Le but de la présente invention est de fournir une dispersion aqueuse colloïdale présentant une faible acidité et, de préférence, une forte concentration en cérium.

On a obtenu une telle dispersion aqueuse colloïdale d'un composé de cérium IV selon un procédé qui consiste :
- à déstabiliser une dispersion aqueuse colloïdale d'un composé de cérium IV à l'aide d'un sel d'un acide monovalent, soluble dans l'eau et présentant un pka compris entre 2,5 et 5,0 ;
- à séparer le précipité obtenu ;
- puis, à le remettre en dispersion, en milieu aqueux.

La demanderesse a découvert, de manière inattendue, que le fait de déstabiliser une dispersion aqueuse colloïdale d'un composé de cérium IV à l'aide d'un sel d'un acide monovalent tel que défini, conduisait à l'obtention d'un précipité, qui, par mise en dispersion dans de l'eau, donnait une dispersion colloïdale, faiblement acide dont les caractéristiques seront exposées ultérieurement.

A titre de matières premières de départ convenant bien à l'invention, on a recours à des sols qui sont obtenus par mise en dispersion dans l'eau, d'un composé de cérium IV répondant à la formule générale (I) :

$$Ce (M)_z (OH)_x (NO_3)_y, p CeO_2, nH_2O \qquad (I)$$

dans laquelle :
- M représente un métal alcalin ou un radical ammonium quaternaire
- z est compris entre 0 et 0,2
- y est compris entre 0 et 1,5
- x est tel que x = 4 - y + z
- p est compris entre 0 et 2,0
- n est compris entre 0 et environ 20

La concentration du composé de cérium IV dans le sol n'est pas critique. Lorsqu'elle est exprimée en $CeO_2$, elle se situe entre 0,1 et 2,5 moles/litre et, de préférence, entre 0,5 et 1 mole/litre.

Le taux de cérium IV sous forme colloïdale est de préférence supérieur à 95 %, mais l'invention n'exclut pas le sol dans lequel il y aurait présence de cérium IV sous forme ionique. On choisit encore plus préférentiellement un taux de cérium compris entre 99 et 100 %.

La taille des colloïdes présents dans le sol peut varier dans une gamme assez large. Généralement, le diamètre hydrodynamique moyen des colloïdes déterminé par diffusion quasi-élastique de la lumière selon la méthode décrite par Michael L. Mc Connell dans Analytical Chemistry 53 n° 8 1007 A (1981), peut varier entre 5 et 200 nm.

Les sols caractérisés ci-dessus sont des produits connus et décrits dans la demande de brevet européen 87 400 601.0.

Selon l'invention, on fait appel, de préférence, aux sols qui font l'objet de la demande de brevet européen EP-A- 0239477 et obtenus par mise en dispersion dans l'eau, d'un composé de cérium IV répondant à la formule (II) :

$$Ce\,(OH)_x\,(NO_3)_y,\; p\,CeO_2,\; n\,H_2O \qquad (II)$$

dans laquelle :

- x est tel que x = 4 - y
- y est compris entre 0,35 et 1,5
- p est supérieur ou égal à 0 et inférieur ou égal à 2,0
- n est supérieur ou égal à 0 et inférieur ou égal à environ 20

Le sol présente des tailles de colloïdes pouvant varier dans une gamme assez large allant de 10 à 100 nm.

Par basification jusqu'à obtention d'un pH de 3,0, on peut obtenir des colloïdes plus gros dont le diamètre hydrodynamique se situe alors entre 30 et 200 nm.

L'obtention des sols ayant les tailles de colloïdes précitées consiste à mettre en dispersion dans l'eau, le composé de cérium IV de formule (II) qui est directement dispersable dans l'eau. Ledit composé est dispersé sous agitation en milieu aqueux ou en milieu légèrement acide de telle sorte qu'il conduise à un sol dont le pH est compris entre 1 et 2,5.

Le composé de cérium IV de formule (II) est préparé selon un procédé qui consiste dans une première étape, à hydrolyser une solution aqueuse d'un sel de cérium IV en milieu acide, dans une deuxième étape, à séparer le précipité obtenu et dans une troisième étape, qui n'est pas obligatoire, à le traiter thermiquement.

Dans la première étape, on réalise l'hydrolyse d'une solution aqueuse d'un sel de cérium IV.

A cet effet, on part d'une solution de cérium IV qui peut être une solution aqueuse de nitrate cérique. Ladite solution peut contenir sans inconvénient du cérium à l'état céreux mais il est souhaitable pour avoir un bon rendement de précipitation qu'elle contienne au moins 85 % de cérium IV.

La solution de sel de cérium est choisie de telle sorte qu'elle ne contienne pas d'impuretés qui puissent se retrouver, dans le produit final. Il peut être avantageux de mettre en jeu une solution d'un sel de cérium présentant un degré de pureté supérieure à 99 %.

La concentration de la solution de sel de cérium n'est pas un facteur critique, selon l'invention. Lorsqu'elle est exprimée en cérium IV, elle peut varier entre 0,3 et 3 moles par litre de préférence entre 0,5 et 1,5 moles/litre.

A titre de matières premières, on peut faire appel à une solution de nitrate cérique obtenue par action de l'acide nitrique sur un oxyde cérique hydraté préparé d'un manière classique, par réaction d'une solution d'un sel céreux par exemple, le carbonate céreux et d'une solution d'ammoniaque en présence d'eau oxygénée.

La solution de nitrate cérique obtenue selon le procédé d'oxydation électrolytique d'une solution de nitrate céreux et qui est décrite dans FR-A 2 570 087 (n° 84 13641) constitue une matière première de choix.

Le milieu d'hydrolyse est constitué par de l'eau dont la nature n'est pas critique et qui est, de préférence, de l'eau distillée ou permutée.

L'acidité peut être apportée par ajout d'un acide minéral. D'une manière préférentielle, on choisit l'acide nitrique. On peut utiliser un acide qui peut être concentré ou dilué, par exemple, jusqu'à $10^{-2}$ N.

Elle peut également provenir de la solution de nitrate cérique qui peut être légèrement acide et avoir une normalité variant entre 0,01 N et 5 N de préférence entre 0,1 N et 1 N.

La quantité d'ions $H^+$ introduite pour la réaction d'hydrolyse est telle que le rapport molaire $[H^+]/[Ce^{IV}$ éq.] est supérieur ou égal à 0 et inférieur ou égal à 3, et de préférence, compris entre 0,4 et 2,5.

La proportion entre la solution aqueuse de sel ce cérium IV et le milieu d'hydrolyse (essentiellement l'eau) est telle que la concentration finale équivalente en cérium IV est comprise entre 0,1 et 1,0 mole/litre de préférence 0,2 à 0,6 mole/litre.

On définit la concentration finale équivalente en cérium IV par l'équation suivante :

$$[Ce^{IV}\ \text{éq.}] = \frac{[Ce^{IV}] \times V'}{V + V'}$$

dans laquelle :

- $[Ce^{IV}]$ est la concentration en moles/litre de la solution de sel de cérium IV
- V représente le volume d'eau éventuellement additionné d'acide
- V' représente le volume de la solution de cérium IV.

L'hydrolyse du sel de cérium IV réalisée dans les conditions telles que décrites précédemment est effectuée entre 70°C et 120°C et de préférence à la température de reflux du milieu réactionnel qui se situe vers 100°C.

Il est plus aisé de travailler à la température de reflux qui est facile à contrôler et à reproduire.

On peut conduire l'étape d'hydrolyse selon plusieurs variantes. Par exemple, on peut additionner en une seule fois, graduellement ou en continu la solution de sel de cérium IV dans l'eau contenant éventuellement de l'acide portée à la température réactionnelle ou inversement.

On peut également conduire le procédé en continu. A cet effet, on effectue simultanément et en continu le mélange de la solution de sel de cérium IV et du milieu d'hydrolyse et l'on chauffe en continu le mélange, à la température réactionnelle choisie.

Selon un mode de réalisation préférée de l'invention, on mélange la solution de sel de cérium IV et le milieu d'hydrolyse puis l'on porte ledit mélange maintenu sous agitation à la température réactionnelle.

Quel que soit le mode d'exécution de l'invention, on observe la formation d'un précipité. Le temps de réaction peut varier entre 2 et 8 heures et de préférence, entre 3 et 6 heures.

La deuxième étape du procédé consiste à séparer selon les techniques classiques, la masse réactionnelle qui se présente sous la forme d'une suspension dont la température se situe le plus souvent entre 90°C et 100°C. Cette opération est effectuée avant ou après refroidissement de la masse réactionnelle à température ambiante c'est-à-dire le plus souvent entre 10°C et 25°C.

On sépare le précipité selon les techniques classiques de séparation : filtration, décantation, essorage et centrifugation.

Une troisième étape du procédé de l'invention consiste à effectuer un traitement thermique du précipité séparé.

Cette opération est facultative, car il a été trouvé que le précipité séparé suite à la première étape d'hydrolyse était directement dispersable dans l'eau et qu'il était possible d'obtenir directement un sol aqueux par mise en dispersion dans l'eau du précipité séparé sans qu'il soit nécessaire de la sécher. En effet, une étape de séchage n'est pas indispensable et une élimination de toute l'eau libre n'est pas requise.

Les conditions de séchage peuvent varier dans de larges limites. C'est ainsi que la température peut être choisie entre 15°C et 100°C, de préférence, entre la température ambiante et 50°C. La durée de séchage est choisie de préférence entre 5 et 48 heures afin d'obtenir un produit sec (n = 0). L'opération de séchage peut être faite à l'air ou sous pression réduite, par exemple, entre 1 et 100 mm de mercure (133,322 Pa et 13332,2 Pa).

Quel que soit le degré d'hydratation du composé de cérium IV répondant à la formule (II), on obtient un composé de cérium IV directement dispersable dans l'eau et qui, par mise en dispersion dans l'eau, conduit à un sol ayant des colloïdes présentant un diamètre hydrodynamique variant entre 10 et 100 nm.

D'une manière préférentielle, on fait appel à un sol, obtenu par mise en dispersion dans l'eau d'un composé de cérium IV répondant à la formule (II) issu directement de l'étape de séparation, sans effectuer l'opération de séchage.

A titre d'autres exemples de sols convenant également à la présente invention, on peut faire appel à des sols ayant généralement un diamètre hydrodynamique moyen variant entre 30 et 60 nm et préparé selon un procédé qui consiste à former une dispersion d'oxyde cérique hydraté avec de l'eau et un acide notamment l'acide nitrique, à chauffer la suspension, la quantité d'acide présente dans la dispersion est telle que le pH est inférieur à 5,4. L'oxyde cérique hydraté de départ est préparé par réaction d'une solution d'un sel céreux, par exemple, le carbonate céreux et d'une solution d'ammoniaque en présence d'un agent oxydant, notamment l'eau oxygénée.

Pour plus de détails sur la préparation du sol, on peut se référer à FR-A-2 416 867.

Conformément au procédé de l'invention, on utilise un sel d'un acide monovalent pour déstabiliser le sol caractérisé ci-dessus.

On fait appel au sel d'ammonium ou d'un métal alcalin, de préférence, de sodium d'un acide dont le choix est relié au fait qu'il doit être soluble dans l'eau, être monovalent et présenter un pka choisi entre 2,5 et 5,0.

Comme exemples de sels d'acides susceptibles d'être mis en oeuvre, on peut citer ceux de l'acide acétique, l'acide propionique, l'acide monochloracétique.

L'acétate de sodium constitue une matière première de choix.

On préfére le mettre en oeuvre sous forme d'une solution aqueuse bien qu'il puisse également être sous forme solide.

La concentration de la solution dudit sel n'est pas critique et dépend essentiellement de sa solubilité.

La quantité de sel d'un acide monovalent additionnée est déterminée de telle sorte qu'elle est au moins égale à la concentration critique de coagulation du sol de cérium et n'excède pas de préférence le double de la concentration critique de coagulation.

On entend par concentration critique de coagulation, la quantité de sel nécessaire pour faire précipiter tout le cérium en solution.

Pour un sol présentant une concentration donnée en cation cérium, on effectue une série d'essais au cours desquels on augmente progressivement la concentration du sel d'un acide monovalent.

Il y a formation d'un précipité que l'on sépare par centrifugation.

On définit un seuil de concentration du sel (concentration critique de coagulation) à partir de laquelle le cérium déterminé par exemple par dosage volumétrique à l'aide d'une solution titrée de fer II et dosage en retour de l'excès de fer II à l'aide d'une solution titrée de chrome VI est absent du surnageant, puis une zone de concentration dont la borne supérieure correspondant au double de la concentration critique de coagulation.

Généralement le rapport molaire entre le sel de l'acide monovalent et le sel de cérium exprimé en cation métallique varie, de préférence, entre 0,2 et 0,8 et encore, plus préférentiellement, entre 0,3 et 0,6.

D'une manière pratique, on additionne le sel d'un acide monovalent dans la dispersion colloïdale aqueuse de composé de cérium IV ou inversement. L'addition peut être effectuée en une seule fois, graduellement ou en continu et s'effectue sous agitation.

Préférentiellement, on ajoute ledit sel dans la dispersion colloïdale aqueuse du composé de cérium IV.

On fait le mélange à une température qui est de préférence inférieure ou égale à 60°C et on l'on travaille de préférence à la température ambiante le plus souvent comprise entre 10 et 25°C.

A la fin de l'addition du sel de l'acide monovalent, on peut éventuellement maintenir encore le milieu réactionnel sous agitation pendant quelque temps afin de parfaire la précipitation : cette durée n'est pas critique et peut varier entre 1 minute et 24 heures.

La deuxième étape du procédé consiste à séparer le précipité obtenu selon les techniques classiques de séparation solide-liquide : filtration, décantation, centrifugation ou essorage.

Cette séparation est effectuée généralement à température ambiante.

On effectue la séparation de telle sorte que le précipité séparé soit bien essoré et contienne une teneur en eau comprise, de préférence, entre 30 et 40 %.

Dans une dernière étape du procédé de l'invention, on met en dispersion dans l'eau, le précipité ainsi séparé.

Pour ce qui est de l'eau, sa nature n'est pas critique et l'on utilise de préférence, de l'eau distillée.

On effectue la préparation du sol, de préférence, sous agitation et à une température choisie entre 15°C et 40°C, de préférence à température ambiante.

Un autre objet de la présente invention est une nouvelle dispersion colloïdale d'une composé de cérium IV en milieu aqueux dont les colloïdes répondent à la formule chimique suivante (III) :

$$Ce(A)_x (NO_3)_y (OH)_{4-x-y} \qquad (III)$$

dans laquelle :

– A représente l'anion d'un acide monovalent soluble dans l'eau et présentant un pka compris entre 2,5 et 5,0

– x est un nombre supérieur ou égal à 0,2 et inférieur ou égal à 0,8,

– y est un nombre supérieur ou égal à 0,01 et inférieur ou égal à 0,1.

La composition chimique des colloïdes est déterminée sur le résidu obtenu après ultracentrifugation de la dispersion par dosage du cérium selon la méthode précitée, des ions nitrate par détermination de l'azote selon la méthode de KJELDAHL et par dosage élémentaire du carbone.

Le sol préféré de l'invention est celui dont les colloïdes répondent à la formule (III) dans laquelle A représente l'anion acétate, propionate ou monochloracétate et encore plus préférentiellement l'acétate : x étant supérieur ou égal à 0,3 et inférieur ou égal à 0,6.

Une autre caractéristique du sol de l'invention est de présenter un pH compris entre 3,5 et 5,0 et, de préférence, compris entre 4,0 et 5,0.

Dans le sol obtenu, le composé de cérium IV se trouve essentiellement sous forme d'une dispersion colloïdale dans l'eau ce qui signifie que ledit composé a des particules de dimensions colloïdales mais cecin'exclut pas la présence de cérium IV sous forme ionique.

Le taux de cérium IV sous forme colloïdale est généralement supérieur à 95 % et, de préférence, compris entre 99 et 100 %.

Le sol aqueux de l'invention peut présenter une concentration en cérium, exprimée en $CeO_2$, pouvant atteindre jusqu'à 2,5 moles par litre.

La taille des colloïdes est définie par la mesure du diamètre hydrodynamique moyen des colloïdes déterminé par diffusion quasi-élastique de la lumière selon la méthode décrite par Michael L. McConnell dans "Analytical Chemistry, Vol. 53, n° 8, 1007 A (1981)". Elle dépend du pH du sol obtenu, les colloïdes sont d'autant plus gros que le pH du sol est plus élevé.

Généralement, le diamètre hydrodynamique moyen des colloïdes varie entre 20 et 100 nm et le plus souvent entre 30 et 60 nm.

On remarquera que les sols obtenus selon le procédé de l'invention sont parfaitement stables dans les conditions habituelles de stockage ce qui est nettement mis en évidence dans les exemples.

On donne, ci-après, des exemples qui illustrent l'invention sans toutefois la limiter. Dans les exemples, les pourcentages donnés sont exprimés en poids.

EXEMPLE 1

a) Préparation d'un sol aqueux d'un composé de cérium IV

Dans un ballon tricol de 4 litres muni d'un thermomètre, d'un dispositif d'agitation, d'un système d'introduction de réactifs, d'un réfrigérant ascendant et équipé également d'un dispositif de chauffage, on introduit à température ambiante :
- 1 256 cm$^3$ d'eau distillée,
- 744 cm$^3$ d'une solution de nitrate cérique préparée par électrolyse conformément à FR-A-2 570 087 et contenant 1,25 moles/litre de cérium IV, 0,05 mole/litre de cérium III et ayant une acidité libre de 0,5 N.

Dans le milieu d'hydrolyse, la concentration en cérium IV exprimée en CeO$_2$ est égale à 80 g/litre et le rapport molaire [H$^+$]/[Ce$^{IV}$ éq.] est égal à 0,4.

On maintient le milieu réactionnel sous agitation et au reflux pendant 4 heures.

On effectue la filtration sur verre fritté (porosité n° 4).

On recueille 192 g d'un précipité jaune contenant 65 % de CeO$_2$.

On additionne 99 g dudit précipité dans l'eau distillée mise en oeuvre en quantité suffisante pour obtenir un volume de 500 cm$^3$.

On obtient un sol ayant une concentration en cérium IV exprimée en CeO$_2$ de 129 g/litre (0,75M), un pH d'environ 1,0 et présentant un diamètre hydrodynamique moyen de colloïdes de 50 nm.

b) Préparation d'un sol aqueux de cérium de pH = 4

Dans un ballon tricol de 2 litres muni d'un thermomètre, d'un dispositif d'agitation, d'un système d'introduction des réactifs, on introduit, à température ambiante, 500 cm$^3$ du sol aqueux d'un composé de cérium IV préparé selon a) puis 250 cm$^3$ d'une solution d'acétate de sodium 0,675 M.

Dans le milieu réactionnel, le rapport molaire acétate de sodium/cérium est égal à 0,45.

On maintient le milieu réactionel sous agitation, pendant 60 minutes puis on effectue la séparation solide-liquide par centrifugation. L'operation est effectuée à 3000 tours/minute pendant 10 minutes.

On obtient un culot d'environ 100 g et un liquid surnageant contenant moins de 0,5 g de CeO$_2$.

On additionne 99 g d'un précipité ainsi séparé dans 130 cm$^3$ d'eau distillée.

On obtient un sol dont les colloïdes répondent à la formule chimique suivante Ce(CH$_3$COO)$_{0,3}$ (NO$_3$)$_{0,05}$ (OH)$_{3,65}$ ayant une concentration en cérium IV exprimée en CeO$_2$ de 385 g/litre et un pH de 4,0.

L'examen par diffusion quasi-élastique de la lumière montre la présence de colloïdes de diamètre hydrodynamique moyen de 48 nm.

EXEMPLE 2

a) Préparation d'un sol aqueux d'un composé de cérium IV

Elle est effectuée, conformément au mode opératoire de l'exemple 1.

b) Préparation d'un sol aqueux de cérium de pH = 4,9

Dans un appareillage tel que décrit dans l'exemple 1-b, on introduit, à température ambiante, 500 cm$^3$ du sol aqueux d'un composé de cérium IV préparé selon a) puis 250 cm$^3$ d'une solution d'acétate de sodium 0,9M.

Dans le milieu réactionnel, le rapport molaire acétate de sodium/cérium est égal à 0,6.

On maintient le milieu réactionnel sous agitation, pendant 60 minutes puis on effectue la séparation solide-liquide par centrifugation. L'opération est effectué à 3 000 tours/minute pendant 10 minutes.

On obtient un culot d'environ 100 g et un liquide surnageant contenant moins de 0,5 g de CeO$_2$.

On additionne 99 g du précipité ainsi séparé dans 300 cm$^3$ d'eau distillée.

On obtient un sol dont les colloïdes répondent à la formule chimique suivante Ce(CH$_3$COO)$_{0,35}$ (NO$_3$)$_{0,05}$ (OH)$_{3,60}$, ayant une concentration en Cérium IV exprimée en CeO$_2$ de 195 g/litre et un pH de 4,9.

L'examen par diffusion quasi-élastique de la lumière montre la présence de colloïdes de diamètre hydrodynamique moyen de 95 nm.

## Revendications

1. Procédé d'obtention d'une dispersion colloïdale d'un composé de cérium IV en milieu aqueux présentant une faible acidité caractérisé par le fait qu'il consiste :
   – à déstabiliser une dispersion aqueuse colloïdale d'un composé de cérium IV à l'aide d'un sel d'un acide monovalent, soluble dans l'eau et présentant un pka compris entre 2,5 et 5,0,
   – à séparer le précipité obtenu,
   – puis, à le remettre en dispersion, en milieu aqueux.

2. Procédé selon la revendication 1 caractérisé par le fait que la dispersion aqueuse colloïdale du composé de cérium IV mise en oeuvre répond à la formule générale (I)

$$Ce\ (M)_z\ (OH)_x\ (NO_3)_y,\ p\ CeO_2,\ nH_2O \qquad (I)$$

dans laquelle :
   – M représente un métal alcalin ou un radical ammonium quaternaire
   – z est compris entre 0 et 0,2
   – y est compris entre 0 et 1,5
   – x est tel que x = 4 - y + z
   – p est compris entre 0 et 2,0
   – n est compris entre 0 et environ 20

3. Procédé selon la revendication 2 caractérisé par le fait que la concentration du composé de cérium IV dans ladite dispersion colloïdale varie entre 0,1 et 2,5 moles/litre.

4. Procédé selon la revendication 3 caractérisé par le fait que ladite concentration est comprise entre 0,5 et 1 mole/litre.

5. Procédé selon la revendication 2 caractérisé par le fait que le taux de cérium sous forme colloïdale dans ladite dispersion est supérieur à 95 %.

6. Procédé selon la revendication 2 caractérisé par le fait que les colloïdes présentant un diamètre hydrodynamique moyen variant entre 5 et 200 nm.

7. Procédé selon l'une des revendications 1 à 6 caractérisé par le fait qu'il consiste à mettre en oeuvre une dispersion aqueuse colloïdale d'un composé de cérium IV préparée par mise en dispersion dans l'eau d'un composé de cérium IV répondant à la formule (II) :

$$Ce(OH)_x\ (NO)_y,\ pCeO_2,\ nH_2O \qquad (II)$$

dans laquelle :
   – x est tel que x = 4 - y
   – y est compris entre 0,35 et 1,5
   – p est supérieur ou égal à 0 et inférieur ou égal à 2,0
   – n est supérieur ou égal à 0 et inférieur ou égal à environ 20 et obtenu selon un procédé qui consiste, dans une première étape, à hydrolyser une solution aqueuse d'un sel de cérium IV en milieu acide : le rapport molaire $[H^+]/[Ce^{IV}\ éq.]$ est supérieur ou égal à 0 et inférieur ou égal à 3 ; dans une deuxième étape à traiter thermiquement le précipité ainsi obtenu.

8. Procédé selon la revendication 7 caractérisé par le fait que le rapport molaire $[H^+]/[Ce^{IV}\ éq.]$ est compris entre 0,4 et 2,5.

9. Procédé selon la revendication 7 et 8 caractérisé par le fait que l'on met le précipité séparé directement en dispersion dans l'eau, sans effectuer d'opération de séchage.

10. Procédé selon la revendication 1 caractérisé par le fait que le sel de l'acide monovalent est un sel d'ammonium ou d'un métal alcalin de l'acide acétique, propionique ou monochloracétique.

11. Procédé selon la revendication 10 caractérisé par le fait que ledit sel est l'acétate de sodium.

12. Procédé selon l'une des revendications 1 à 11 caractérisé par le fait que la quantité de sel d'un acide monovalent additionnée est déterminée de telle sorte qu'elle est au moins égale à la concentration critique de coagulation du sel de cérium et n'excède pas le double de la concentration critique de coagulation.

13. Procédé selon l'une des revendications 1 à 12 caractérisé par le fait que le rapport molaire entre le sel de l'acide monovalent et le sel de cérium exprimé en cation métallique varie entre 0,2 et 0,8.

14. Procédé selon la revendication 13 caractérisé par le fait que ledit rapport molaire varie entre 0,3 et 0,6.

15. Procédé selon l'une des revendications 1 à 14 caractérisé par le fait que l'on additionne le sel de l'acide monovalent dans la dispersion colloïdale d'un composé de cérium IV.

16. Procédé selon l'une des revendications 1 à 15 caractérisé par le fait que la température réactionnelle est comprise entre la température ambiante et 60°C.

17. Procédé selon l'une des revendications 1 à 16 caractérisé par le fait que l'on maintient le milieu réactionnel sous agitation afin de parfaire la précipitation.

18. Procédé selon l'une des revendications 1 à 17 caractérisé par le fait que la teneur en eau du précipité séparé est amenée entre 30 et 40 %.

19. Procédé selon l'une des revendications 1 à 18 caractérisé par le fait que l'on met le précipité séparé en dispersion dans de l'eau distillée.

20. Nouvelle dispersion colloïdale d'un composé de cérium IV en milieu aqueux dont les colloïdes répondent à la formule chimique suivante :

$$Ce(A)_x ((NO_3)_y (OH)_{4-x-y} \qquad (III)$$

dans laquelle :
- A représente l'anion d'un acide monovalent soluble dans l'eau et présentant un pka compris entre 2,5 et 5,0,
- x est un nombre supérieur ou égal à 0,2 et inférieur ou égal à 0,8,
- y est un nombre supérieur ou égal à 0,01 et inférieur ou égal à 0,1.

21. Nouvelle dispersion colloïdale selon la revendication 20 caractérisée par le fait que A représente l'anion acétate, propionate, monochloracétate.

22. Nouvelle dispersion colloïdale selon l'une des revendications 20 et 21 caractérisée par le fait que A représente l'anion acétate.

23. Nouvelle dispersion colloïdale selon l'une des revendications 20 à 22 caractérisée par le fait que x est supérieur ou égal à 0,3 et inférieur ou égal à 0,6.

24. Nouvelle dispersion colloïdale selon l'une des revendications 20 à 23 caractérisée par le fait qu'elle présente un pH compris entre 3,5 et 5,0.

25. Nouvelle dispersion colloïdale selon la revendication 24 caractérisée par le fait que ledit pH est compris entre 4,0 et 5,0.

26. Nouvelle dispersion colloïdale selon l'une des revendications 20 à 25 caractérisée par le fait que le taux de cérium IV sous forme colloïdale est supérieur à 95 %.

27. Nouvelle dispersion colloïdale selon l'une des revendications 20 à 26 caractérisée par le fait qu'elle présente une forte concentration en cérium exprimée en $CeO_2$ pouvant atteindre 2,5 moles/litre.

28. Nouvelle dispersion colloïdale selon l'une des revendications 20 à 27 caractérisée par le fait que le diamètre hydrodynamique moyen de ses colloïdes varie entre 20 et 100 nm.

29. Nouvelle dispersion colloïdale selon la revendication 28 caractérisée par le fait que ledit diamètre est compris entre 30 et 60 nm.


**Patentansprüche**

1. Verfahren zur Herstellung einer kolloidalen Dispersion einer Cer(IV)-Verbindung in wäßrigem Medium, das eine schwache Acidität aufweist, dadurch gekennzeichnet, daß man:
- eine wäßrige kolloidale Dispersion einer Cer(IV)-Verbindung mit Hilfe eines Salzes einer einwertigen Säure, das wasserlöslich ist und einen pka im Bereich von 2,5 bis 5,0 aufweist, destabilisiert,
- den erhaltenen Niederschlag abtrennt
- und ihn dann erneut in wäßrigem Medium dispergiert.

2. Verfahren nach Anspruch 1, dadurch gekennzeichnet, daß die eingesetzte kolloidale wäßrige Dispersion der Cer(IV)-Verbindung der allsemeinen Formel (I)

$$Ce (M)_z (OH)_x (NO_3)_y, p\ CeO_2, nH_2O \qquad (I)$$

entspricht, in der
- M ein Alkalimetall oder eine quaternäre Ammoniumgruppe bedeutet,
- z im Bereich von 0 bis 0,2 liegt,
- y im Bereich von 0 bis 1,5 liegt,
- y so ist, daß x = 4 - y + z,
- p im Bereich von 0 bis 2,0 liegt und
- n im Bereich von 0 bis etwa 20 liegt.

3. Verfahren nach Anspruch 2, dadurch gekennzeichnet, daß die Konzentration der Cer(IV)-Verbindung in der kolloidalen Dispersion 0,1 bis 2,5 mol/l beträgt.

4. Verfahren nach Anspruch 3, dadurch gekennzeichnet, daß die Konzentration 0,5 bis 1 mol/l beträgt.

5. Verfahren nach Anspruch 2, dadurch gekennzeichnet, daß der Anteil Cer in kolloidaler Form in der Dispersion mehr als 95% ausmacht.

6. Verfahren nach Anspruch 2, dadurch gekennzeichnet, daß die Kolloide einen mittleren hydrodynamischen Durchmesser von 5 bis 200 nm (50 - 2000 Å) aufweisen.

7. Verfahren nach einem der Ansprüche 1 bis 6, dadurch gekennzeichnet, daß man eine wäßrige kolloidale Dispersion einer Cer(IV)-Verbindung einsetzt, die hergestellt worden ist durch Dispergieren in Wasser einer Cer(IV)-Verbindung der Formel (II)

$$Ce(OH)_x (NO)_y, pCeO_2, nH_2O \qquad (II)$$

in der

– x so ist, daß x = 4 - y,

– y im Bereich von 0,35 bis 1,5 liegt,

– p größer oder gleich 0 und kleiner oder gleich 2,0 ist,

– n größer oder gleich 0 und kleiner oder gleich etwa 20 ist, und die erhalten worden ist gemäß einem Verfahren, bei dem in einer ersten Stufe eine wäßrige Lösung eines Cer(IV)-Salzes in saurem Medium hydrolysiert wird, wobei das Molverhältnis $[H^+]/[ce^{IV}$ Äq.] größer oder gleich 0 und kleiner oder gleich 3 ist; und daß man in einer zweiten Stufe den so erhaltenen niederschlag thermisch behandelt.

8. Verfahren nach Anspruch 7, dadurch gekennzeichnet, daß das Molverhältnis $[H^+]/[Ce^{IV}$ Äq.] 0,4 bis 2,5 beträgt.

9. Verfahren nach Anspruch 7 und 8, dadurch gekennzeichnet, daß man den abgetrennten Niederschlag direkt, ohne zu trocknen, in wasser dispergiert.

10. Verfahren nach Anspruch 1, dadurch gekennzeichnet, daß das Salz der einwertigen Säure ein Ammonium- oder ein Alkalimetallsalz der Essigsäure, Propionsäure oder Monochloressigsäure ist.

11. Verfahren nach Anspruch 10, dadurch gekennzeichnet, daß das Salz Natriumacetat ist.

12. Verfahren nach einem der Ansprüche 1 bis 11, dadurch gekennzeichnet, daß die zugesetzte Menge Salz einer einwertigen Säure so bestimmt wird, daß sie mindestens gleich ist der kritischen Konzentration der Koasulierung des Cersalzes und das Zweifache der kritischen Konzentration der Koagulation nicht übersteigt.

13. Verfahren nach einem der Ansprüche 1 bis 12, dadurch gekennzeichnet, daß das Molverhältnis von Salz der einwertigen Säure zu Cersalz, ausgedrückt als Metallkation, 0,2 bis 0,8 beträgt.

14. Verfahren nach Anspruch 13, dadurch gekennzeichnet, daß das Molverhältnis 0,3 bis 0,6 beträgt.

15. Verfahren nach einem der Ansprüche 1 bis 14, dadurch gekennzeichnet, daß man das Salz der einwertigen Säure der kolloidalen Dispersion einer Cer(IV)-Verbindung zusetzt.

16. Verfahren nach einem der Ansprüche 1 bis 15, dadurch gekennzeichnet, daß die Reaktionstemperatur im Bereich von Raumtemperatur bis 60°C liegt.

17. Verfahren nach einem der Ansprüche 1 bis 16, dadurch gekennzeichnet, daß man das Reaktionsedium rührt, um die Ausfällung zu bewirken.

18. Verfahren nach einem der Ansprüche 1 bis 17, dadurch gekennzeichne, daß der Wassergehalt des abgetrennten Niederschlags auf 30 bis 40% gebracht wird.

19. Verfahren nach einem der Ansprüche 1 bis 18, dadurch gekennzeichnet, daß man den abgetrennten Niederschlag in destilliertem Wasser dispergiert.

20. Neue kolloidale Dispersion einer Cer(IV)-Verbindung in wäßrigem Medium, deren Kolloide der folgenden chemischen Formel

$$ce(A)_x (NO_3)_y (OH)_{4-x-y} \qquad (III)$$

entsprechen, in der

– A das Anion einer wasserlöslichen einwertigen Säure mit einem pka von 2,5 bis 5,0 darstellt,

– x eine zahl größer oder gleich 0,2 und kleiner oder gleich 0,8 ist,

– y eine zahl größer oder gleich 0,01 und kleiner oder gleich 0,1 ist.

21. Neue kolloidale Dispersion nach Anspruch 20, dadurch gekennzeichnet, daß A das Acetat-, Propionat- oder Monochloracetatanion bedeutet.

22. Neue kolloidale Dispersion nach einem der Ansprüche 20 und 21, dadurch gekennzeichnet, daß A das Anionacetat bedeutet.

23. Neue kolloidale Dispersion nach einem der Ansprüche 20 bis 22, dadurch gekennzeichnet, daß x gröber oder gleich 0,3 und kleiner oder gleich 0,6 ist.

24. Neue kolloidale Dispersion nach einem der Ansprüche 20 bis 23, dadurch gekennzeichnet, daß sie einen pH-wert im Bereich von 3,5 bis 5,0 aufweist.

25. Neue kolloidale Dispersion nach Anspruch 24, dadurch gekennzeichnet, daß der pH-Wert im Bereich von 4,0 bis 5,0 liegt.

26. Neue kolloidale Dispersion nach einem der Ansprüche 20 bis 25, dadurch gekennzeichnet, daß der Anteil Cer(IV) in kolloidaler Form mehr als 95% ausmacht.

27. Neue kolloidale Dispersion nach einem der Ansprüche 20 bis 26, dadurch gekennzeichnet, daß sie eine starke Cerkonzentration, angegeben als $CeO_2$, aufweist, die bis zu 2,5 mol/l betragen kann.

28. Neue kolloidale Dispersion nach einem der Ansprüche 20 bis 27, dadurch gekennzeichnet, daß der mittlere hydrodynamische Durchmesser ihrer Kolloide 20 bis 100 nm beträgt.

29. Neue kolloidale Dispersion nach Anspruch 28, dadurch gekennzeichnet, daß der Durchmesser 30 bis 60 nm beträgt.

## Claims

1. A method of obtaining a colloidal dispersion of a cerium IV compound in an aqueous medium of low acidity, characterised in that it comprises:
   - destabilising a colloidal aqueous dispersion of a cerium IV compound, using a salt of a monovalent acid which is water-soluble and has a pka from 2.5 to 5.0.
   - separating the precipitate obtained
   - then redispersing it in an aqueous medium.

2. The method of claim 1, characterised in that the colloidal aqueous dispersion of the cerium IV compound used is of general formula (I)

$$Ce\ (M)_z\ (OH)_x\ (NO_3)_y,\ p\ CeO_2,\ nH_2O \qquad (I)$$

wherein:
   - M represents an alkali metal or a quaternary ammonium radical
   - z is from 0 to 0.2
   - y is from 0 to 1.5
   - x is such that $x = 4 - y + z$
   - p is from 0 to 2.0
   - n is from 0 to about 20.

3. The method of claim 2, characterised in that the concentration of cerium IV compound in the colloidal dispersion ranges from 0.1 to 2.5 moles/litre.

4. The method of claim 3, characterised in that said concentration is from 0.5 to 1 mole/litre.

5. The method of claim 2, characterised in that the content of cerium in colloidal form in said dispersion is over 95%.

6. The method of claim 2, characterised in that the colloids have a mean hydrodynamic diameter from 5 to 200 nm.

7. The method of any of claims 1 to 6, characterised in that it comprises using a colloidal aqueous dispersion of a cerium IV compound, prepared by dispersing in water a cerium IV compound of formula (II):

$$Ce(OH)_x\ (NO)_y,\ pCeO_2,\ nH_2O \qquad (II)$$

wherein:
   - x is such that $x = 4 - y$
   - y is from 0.35 to 1.5
   - p is equal to zero or over and no more than 2.0
   - n is equal to zero or over and no more than about 20, and obtained by a method comprising a first stage of hydrolysing an aqueous solution of a cerium IV salt in an acid medium - the molar ratio of $[H^+]/[Ce^{IV}\ eq.]$ being equal to zero or over and no more than 3 - and a second stage of heat treating the resultant precipitate.

8. The method of claim 7, characterised in that the molar ratio of $[H^+]/[Ce^{IV}\ eq.]$ is from 0.4 to 2.5.

9. The method of claims 7 and 8, characterised in that the separated precipitate is dispersed in water directly, without carrying out a drying operation.

10. The method of claim 1, characterised in that the salt of the monovalent acid is an ammonium or alkali metal salt of acetic, propionic or monochloroacetic acid.

11. The method of claim 10, characterised in that said salt is sodium acetate.

12. The method of any of claims 1 to 11, characterised in that the quantity of salt of a monovalent acid which is added is determined so that it is at least equal to the critical coagulation concentration of the cerium salt and not more than twice the critical coagulation concentration.

13. The method of any of claims 1 to 12, characterised in that the molar ratio of the salt of the monovalent acid to the cerium salt expressed as a metallic cation ranges from 0.2 to 0.8.

14. The method of claim 13, characterised in that said molar ratio is from 0.3 to 0.6.

15. The method of any of claims 1 to 14, characterised in that the salt of the monovalent acid is added to the colloidal dispersion of a cerium IV compound.

16. The method of any of claims 1 to 15, characterised in that the reaction temperature is from room temperature to 60°C.

17. The method of any of claims 1 to 16, characterised in that the reaction medium is agitated continuously in order to obtain complete precipitation.

18. The method of any of claims 1 to 17, characterised in that the water content of the separated precipitate is brought to 30 - 40%.

19. The method of any of claims 1 to 18, characterised in that the separated precipitate is dispersed in distilled water.

20. A new colloidal dispersion of a cerium IV compound in an aqueous medium, in which the colloids are of the following chemical formula:

$$Ce(A)_x \, ((NO_3)_y \, (OH)_{4-x-y} \qquad (III)$$

wherein:

– A represents the anion of a water soluble monovalent acid with a pka from 2.5 to 5.0

– x is a number equal to 0.2 or more and no higher than 0.8

– y is a number equal to 0. 01 or more and no higher than 0.1.

21. The new colloidal dispersion of claim 20, characterised in that A represents the acetate, propionate, or monochloroacetate anion.

22. The new colloidal dispersion of claim 20 or 21, characterised in that A represents the acetate anion.

23. The new colloidal dispersion of any of claims 20 to 22, characterised in that x is equal to 0.3 or over and no greater than 0.6.

24. The new colloidal dispersion of any of claims 20 to 23, characterised in that it has a pH from 3.5 to 5.0.

25. The new colloidal dispersion of claim 24, characterised in that said pH is from 4.0 to 5.0.

26. The new colloidal dispersion of any of claims 20 to 25, characterised in that the content of cerium IV in colloidal form is over 95%.

27. The new colloidal dispersion of any of claims 20 to 26, characterised in that it has a high concentration of cerium, expressed as $CeO_2$, of up to 2.5 moles/litre.

28. The new colloidal dispersion of any of claims 20 to 27, characterised in that the mean hydrodynamic diameter of its colloids ranges from 20 to 100 nm.

29. The new colloidal dispersion of claim 28, characterised in that said diameter is from 30 to 60 nm.